# FASCICULE DE BREVET EUROPEEN

(11) **EP 2 343 883 B1**
(45) Date de publication et mention de la délivrance du brevet: **06.12.2017**
(21) Numéro de dépôt: 10197067.1
(22) Date de dépôt: 27.12.2010
(51) Int. Cl.: H04N 21/4402, H04N 21/482, H04N 21/84, H04N 5/445, H04N 21/431, H04N 21/81

(54) **Traitement de données pour un affichage perfectionné**
Datenverarbeitung für eine verbesserte Anzeige
Data processing for an improved display

(30) Priorité: 06.01.2010 FR 1050054
(43) Date de publication de la demande: 13.07.2011
(73) Titulaire: Orange, 75015 Paris (FR)
(72) Inventeur: Charrue, Bénédicte, 78110, LE VESINET (FR); Bringue, Xavier, 92250, LA GARENNE COLOMBES (FR)
(74) Mandataire: Ameline, Jean-Paul B.C.

(56) Documents cités:
- WO-A1-99/57890
- JP-A- 11 098 431
- US-A1- 2004 128 683
- US-A1- 2005 108 752
- US-A1- 2009 165 046
- US-A1- 2009 210 910
- US-B1- 6 405 371
- US-B2- 7 353 462

## Description

La présente invention concerne un traitement de données pour un affichage sur écran d'informations relatives à des contenus multimédias, notamment de programmes de télévision du type « guide de programmes électroniques » (ou EPG pour « Electronic Program Guide »), et plus généralement de contenus multimédias (vidéo, images, sons ou autres) par exemple mis en partage avec des tiers.

Les guides de programmes électroniques connus, sur écran de téléviseur, sont textuels. Le texte donnant les informations sur un programme est inscrit dans un cadre qui s'étend sur une partie d'écran proportionnelle à la durée de ce programme. Ainsi, pour un court programme, le cadre prévu pour l'affichage d'informations est de petite taille sur l'écran. Par exemple, la figure 3 du document de l'art antérieur WO-2009/055273 montre un cadre présenté sous la référence 310 qui, s'il devait incorporer plus d'informations, devrait nécessiter des caractères de plus petite taille, par rapport au cadre de la référence 340. L'inconvénient qui en résulte pour un utilisateur est notamment une lecture difficile, du fait de la taille réduite des caractères. Le document de l'art antérieur US 2005/108752 A1 divulgue également un guide de programme électronique présentant les programmes sous forme de vignettes réparties sur un écran selon une matrice. En pratique, dans les guides EPG connus, les titres des programmes ne peuvent pas toujours être affichés en entier. Ils sont souvent coupés. L'information sur les programmes est donc réduite.
Les grilles de programmes peuvent donc s'avérer difficiles à lire en regard de la gestion de l'affichage des données de programmes télévisés dont les durées sont variables, les programmes courts ayant une place très réduite.

La présente invention, définie dans les revendications, vient améliorer la situation. Elle propose à cet effet un procédé mis en oeuvre par un dispositif, de traitement de données pour un affichage, sur commande reçue d'un utilisateur, d'informations relatives à des contenus multimédias ayant des durées respectives et disponibles via une pluralité de sources respectives et à des instants respectifs, tel notamment qu'un programme de télévision. Ces informations sont présentées sous forme de vignettes réparties sur un écran :
- par instant de disponibilité selon un premier axe, et
- par source selon un deuxième axe distinct du premier axe.
Au sens de l'invention, les vignettes sont de dimensions apparentes égales et indépendantes de la durée des contenus.

Ainsi, un utilisateur peut avoir une vue globale et rapide des contenus disponibles à un instant quelconque via un grand nombre de sources.

Préférentiellement, l'ensemble de ces vignettes se présente sous la forme d'une matrice constituée de cellules qui ont toutes la même taille.

Ainsi, chaque élément de la matrice correspond à une vignette. En particulier, une rangée de la matrice ayant une position fixe dans la matrice, par exemple une rangée médiane (horizontale ou verticale) comporte les vignettes des contenus disponibles à un instant de référence, donné, via les différentes sources représentées dans la matrice. Cet instant de référence peut correspondre à l'heure courante (par exemple lorsque l'utilisateur accède à la grille des programmes), ou peut être choisi par l'utilisateur (par exemple s'il souhaite l'affichage de programmes futurs ou passés). L'instant de référence peut donc correspondre aussi à un instant de disponibilité (futur ou passé) d'un contenu particulier dont la vignette est sélectionnée dans la matrice par l'utilisateur, comme on le verra dans un exemple de réalisation ci-après.

Ainsi, le dispositif comprend préférentiellement des moyens pour modifier l'instant de référence précité, et, lorsque, sur commande d'un utilisateur, cet instant de référence est modifié, le dispositif commande une mise à jour des vignettes de la matrice de telle sorte que ladite rangée de position fixe précitée comprend les vignettes relatives aux contenus diffusés à l'instant de référence modifié.

En effet, dans un tel mode de réalisation, le dispositif comprend des moyens pour sélectionner une vignette dans la matrice, et lorsque, sur commande de l'utilisateur, une autre vignette est sélectionnée, le dispositif commande une mise à jour des vignettes de la matrice de telle sorte que la rangée de position fixe, précitée, comprend la vignette sélectionnée et les vignettes relatives aux contenus diffusés à un instant où le contenu associé à la vignette sélectionnée est disponible.

Cette nouvelle méthode d'affichage permet à l'utilisateur, par simple sélection d'une autre vignette, d'obtenir des informations sur un contenu quelconque et les contenus diffusés simultanément à ce contenu quelconque. Par le mécanisme de synchronisation des vignettes d'une rangée par rapport à un instant de référence correspondant à un instant de disponibilité des contenus associés à ces vignettes, l'utilisateur dispose donc d'une information de synchronisation temporelle entre ces contenus, et ce, sans qu'il soit nécessaire d'utiliser un axe temporel commun pour les différentes sources. On s'affranchit ainsi des contraintes d'affichage découlant de l'emploi d'un axe temporel linéaire commun pour les différentes sources : il n'est plus nécessaire de prévoir une taille de vignette, représentative de la durée d'un contenu et respectant cet axe temporel commun, permettant une lisibilité du contenu de cette vignette et un affichage d'un nombre de vignettes suffisant pour que les vignettes des contenus précédents et suivants les contenus couramment diffusés soient toujours visibles quelle que soit la taille de l'écran.

Dans une réalisation, chaque élément de matrice correspond à un contenu différent.

Une telle réalisation permet une représentation claire, structurée et homogène de l'ensemble des contenus. En effet, l'utilisateur voit rapidement les informations sur tous les contenus disponibles à un instant donné, sur un nombre donné de sources, du fait que chaque cellule représente un contenu différent, avec les mêmes dimensions de vignettes pour tous les contenus et indépendamment de leur durée.

En outre, l'utilisateur peut afficher une sélection d'informations seulement en fonction de critères qu'il peut choisir sur les contenus, dans une réalisation avantageuse. Dans une telle réalisation en effet, le dispositif précité est agencé pour :
- sélectionner des contenus selon au moins un critère, et
- piloter un affichage des vignettes de la matrice en affichant les contenus sélectionnés de manière différente par rapport aux contenus non sélectionnés.

Le critère choisi peut être par exemple la période de disponibilité d'un contenu, le genre de contenu (journal d'informations télévisé, film, documentaire, ou autres), la chaîne de télévision diffusant le contenu, ou autres critères. Bien entendu, il est possible de choisir plus d'un critère de sélection à la fois, par exemple tous les contenus diffusés en soirée et qui sont des films.

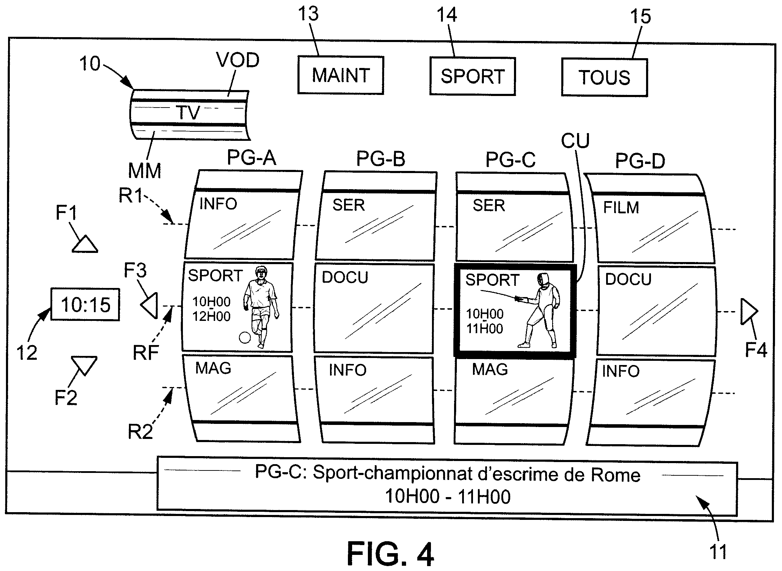

Préférentiellement, comme décrit plus loin en référence à la figure 4, cet affichage de vignettes est effectué avec moins de détails d'informations (voire aucune information) pour les contenus ne répondant pas aux critères de sélection par rapport aux contenus répondant aux critères de sélection.

Dans une réalisation particulière, le dispositif reçoit des métadonnées relatives à chaque contenu et la recherche précitée peut alors être menée par au moins un mot-clé choisi, dans les métadonnées reçues. Par exemple, un nom d'acteur dans un film peut être un mot-clé permettant de sélectionner les films dans lesquels joue cet acteur. De même, le genre du contenu (drame, comédie, fantastique, enfants, etc.) peut être sélectionné aussi par mot-clé.

Plus généralement, la présente invention procure à l'utilisateur un grand confort dans l'utilisation de l'outil consistant en une telle interface homme/machine pour la sélection d'un contenu.

D'autres avantages et caractéristiques de l'invention apparaîtront à la lecture de la description ci-après, en référence aux dessins annexés sur lesquels :
- la figure 1 représente à titre d'exemple un contexte d'application possible de la présente invention,
- la figure 2 illustre une forme de réalisation possible de l'affichage des informations relatives aux contenus issus de différentes sources,
- les figures 3a et 3b illustrent schématiquement les matrices de vignettes associées respectivement à deux instants donnés distincts, en montrant en particulier une mise à jour des vignettes lorsque l'instant donné est modifié suite à une commande de l'utilisateur,
- la figure 4 illustre la matrice de la figure 2 à laquelle a été appliqué un filtrage pour afficher une sélection seulement des informations sur les contenus.

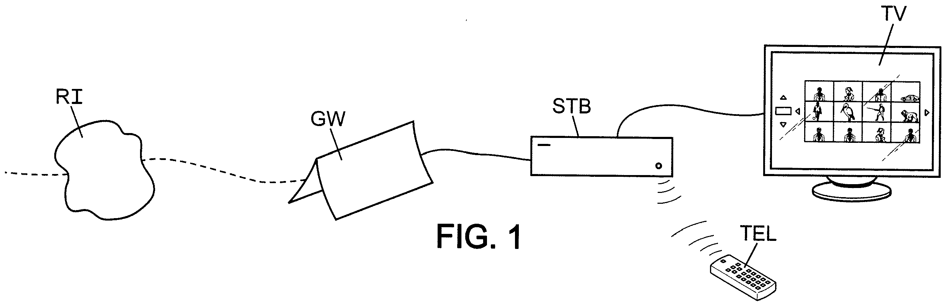

On se réfère tout d'abord à la figure 1 sur laquelle des informations relatives à des contenus multimédias sont affichées sous forme d'une matrice de vignettes sur l'écran d'un poste de télévision TV, dans l'exemple représenté. Ce poste est relié à un terminal de type Set Top Box (STB). Ce terminal STB peut recevoir les données pour l'affichage des vignettes via une passerelle GW reliée à un réseau étendu RI (ou encore par une liaison satellite ou câble). En particulier, un utilisateur peut commander l'affichage de la matrice de vignettes sur l'écran TV, par exemple à l'aide d'une télécommande TEL du terminal STB.

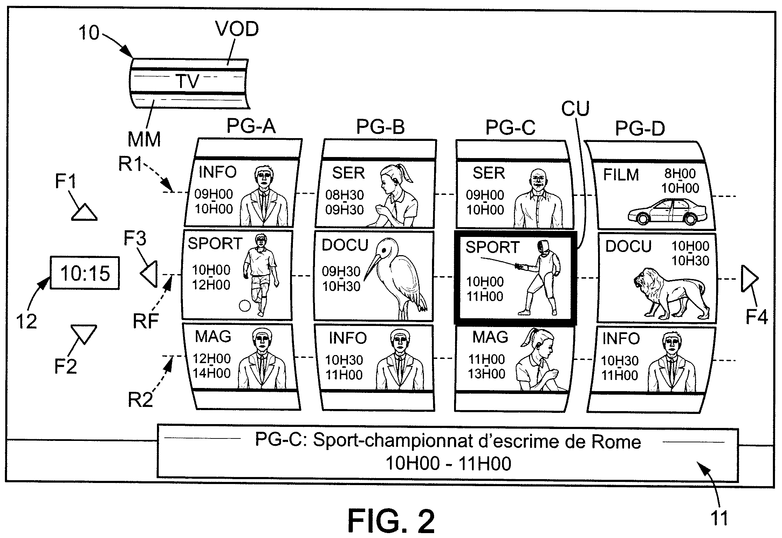

On se réfère maintenant à la figure 2 pour décrire plus en détail l'affichage des informations sur l'écran. Le terminal STB pilote avantageusement l'affichage d'un menu de sélection de type de contenus 10. Il est ainsi possible de sélectionner l'affichage des vignettes relatives au contenu d'une grille de programme d'un guide EPG (référence TV de la figure 2), ou encore d'informations relatives à des contenus multimédias mis en partage avec des tiers (référence MM), ou d'informations relatives à tous autres contenus multimédias (par exemple des films vidéo pour une application de vidéo à la demande VOD).

Dans l'exemple représenté, les contenus multimédias sélectionnés correspondent à des programmes issus de sources PG-A, PG-B, PG-C, PG-D (typiquement des chaînes de télévision pour un guide EPG). Chaque colonne de la matrice de vignettes est associée à une source (la chaîne de programmes PG-A, la chaîne de programmes PG-B, etc.), tandis qu'une ligne de la matrice, telle que la ligne centrale RF, est associée à un instant donné (ici, 10 heures et 15 minutes, dans le cadre portant la référence 12 de la figure 2).

On relèvera alors sur la figure 2 que les informations de tous les programmes d'une même chaîne (trois programmes successifs dans l'exemple représenté) apparaissent dans des vignettes respectives de mêmes dimensions apparentes, même si leurs durées respectives sont différentes. Ainsi, contrairement aux grilles de programmes EPG connues, il n'est pas fait usage ici d'une représentation linéaire de l'axe temporel. Toutes les cellules de la matrice ont la même taille, une colonne comprenant une liste de programmes diffusés successivement sur une chaîne, et ce indépendamment de la durée réelle de ces programmes. Sur une même ligne, en particulier la ligne médiane RF de la figure 2, les programmes prévus à un instant donné (indiqué dans le cadre 12) sont représentés. Chaque élément de matrice se présente alors comme une vignette, inscrite dans une cellule de la matrice et comportant le titre entier du programme, l'heure de début et l'heure de fin, éventuellement le type de programme (journal d'informations, série, film, programme sportif, documentaire, magazine, etc.), ainsi qu'une image animée ou fixe, comme on le verra plus loin.

L'expression "vignettes de mêmes dimensions apparentes" recouvre les différents modes de représentation d'une matrice aux cellules rectangulaires de dimensions identiques, dans lesquelles s'inscrivent ces vignettes. Une telle matrice peut être représentée en deux ou trois dimensions: sous forme de matrice plane avec des cellules rectangulaires sensiblement de même taille, ou en tant que projection d'une telle matrice plane sur une surface en deux ou trois dimensions, tel un trapèze, un cylindre ou une sphère, représentée avec ou sans effet de perspective. A titre d'exemple, la figure 2 représente une matrice plane, à cellules rectangulaires de même taille, projetée sur un cylindre, vue de face, ce qui donne l'impression que la matrice tourne sur un rouleau cylindrique. Du fait de la déformation induite par la projection sur une surface en deux ou trois dimensions de la matrice plane à cellules rectangulaires de même taille, les cellules peuvent ne pas avoir exactement la même forme ou la même taille après projection. En outre, les vignettes inscrites dans les cellules de la matrice peuvent avoir une forme non rectangulaire, ovale ou elliptique par exemple, et sont le cas échéant projetées de la même manière que la matrice sur une surface.

En référence à nouveau à la figure 2, l'instant affiché dans le cadre 12 sert de référence temporelle pour l'affichage des vignettes de la matrice : quelle que soit la valeur de cet instant, la ligne médiane RF comprend les vignettes des contenus prévus/diffusés à cet instant de référence via les différentes sources représentées dans la matrice. Dans cette optique, l'instant affiché dans le cadre 12 est appelé ici "instant de référence".

Dans la représentation de la figure 2, l'axe des abscisses représente les différentes sources (PG-A, PG-B, etc.) et l'axe des ordonnées représente le temps (succession des programmes dans le temps pour une source donnée). Bien entendu, en variante, il peut être prévu d'inverser ces deux axes, avec une succession des programmes d'une même chaîne représentée sur une même ligne et les contenus de chaînes différentes qui sont disponibles à un instant donné représentés sur une même colonne (de position fixe).

L'utilisateur utilise des flèches F1 à F4 pour commander des modifications de la grille de programmes. Chacune de ces flèches correspond respectivement à un appui d'une touche d'une télécommande représentant les flèches "haut", "bas", "gauche" ou "droite". Toute autre méthode de commande simulant un déplacement dans une de ces quatre directions est également envisageable.

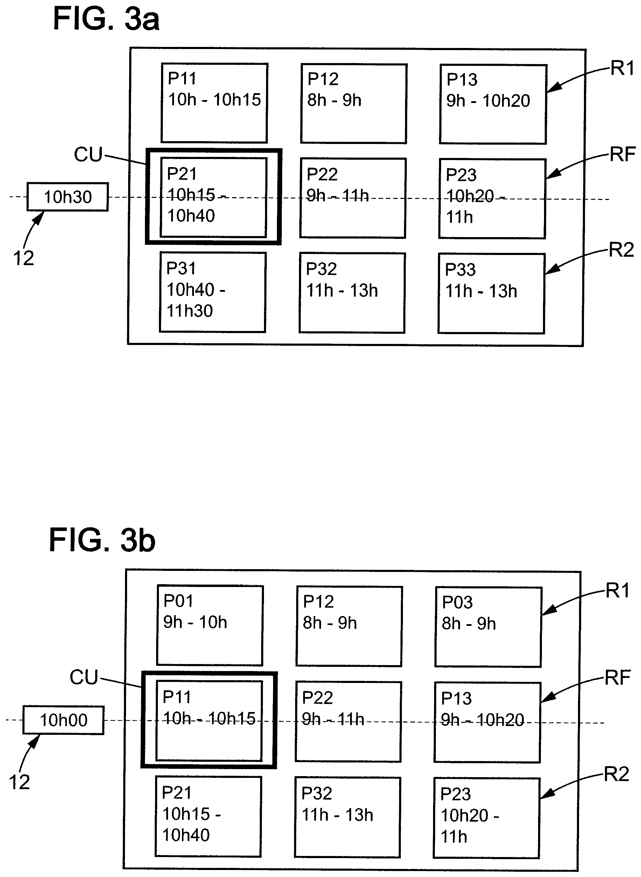

Les flèches F1 et F2 permettent à l'utilisateur de naviguer dans le temps selon deux modes de navigation différents :
- selon un premier mode de navigation, l'utilisateur navigue dans le temps en modifiant (incrémentant ou décrémentant) l'instant de référence affiché dans le cadre 12 ;
- selon un deuxième mode de navigation, l'utilisateur navigue dans le temps en sélectionnant une vignette puis une autre dans la matrice : ceci permet notamment de sélectionner un contenu, diffusé antérieurement ou postérieurement au contenu couramment sélectionné et via la même source que le contenu couramment sélectionné; ce deuxième mode de navigation sera décrit plus en détail en référence aux figures 3a et 3b.

L'utilisateur peut basculer du premier mode de navigation au deuxième mode de navigation ou vice versa en modifiant le focus, c'est-à-dire l'élément d'interface utilisateur qui est couramment sélectionné (représenté par le curseur CU dans l'exemple de la figure 2) :
- soit le focus est sur le cadre 12, et dans ce cas, le mode de navigation courant est le premier mode de navigation ;
- soit le focus est sur une vignette de la matrice (c'est-à-dire que cette vignette est sélectionnée, comme représenté sur la figure 2), et dans ce cas, le mode de navigation courant est le deuxième mode de navigation.
Le changement de focus s'effectue par exemple par actionnement d'une touche prédéfinie d'une télécommande ou par une combinaison de touches ou par toute autre méthode appropriée.

Dans le premier mode de navigation, les flèches F1 et F2 permettent à l'utilisateur de naviguer dans le temps pour faire en sorte que la ligne médiane RF de la matrice représentée sur la figure 2 indique les programmes disponibles à l'instant couramment sélectionné, c'est-à-dire l'instant de référence indiqué dans le cadre 12. Ainsi, la ligne médiane RF de la matrice correspond à la rangée de position fixe précitée RF dans l'exposé ci-avant de l'invention. Par exemple, un incrément (respectivement un décrément) en utilisant la flèche F2 (F1) peut faire avancer (reculer) l'instant indiqué dans le cadre 12 d'un quart d'heure, ou plus selon un choix de l'utilisateur (par exemple de quelques heures ou d'une journée).

En cas de modification de l'instant de référence indiqué dans le cadre 12, les vignettes des lignes autres que la ligne médiane RF sont également mises à jour de sorte que :
- chaque vignette, située dans une ligne R1 précédant la ligne médiane RF et dans une colonne comprenant les contenus issus d'une source, comporte des informations sur un contenu disponible via cette source avant le contenu issu de cette même source dont la vignette figure dans la ligne médiane RF, et
- chaque vignette, située dans une ligne R2 suivant la ligne médiane RF et dans une colonne comprenant les contenus issus d'une source, comporte des informations sur un contenu disponible via cette source après le contenu issu de cette même source dont la vignette figure dans la ligne médiane RF.

Ainsi, dans chaque colonne de la matrice associée à une source donnée, quel que soit l'instant de référence affiché dans le cadre 12 et les vignettes affichées en ligne médiane RF, les vignettes de cette colonne représentent une liste de contenus disponibles via cette source, ordonnée par instant de disponibilité croissant.

En outre, les flèches F3 et F4 permettent à l'utilisateur de naviguer entre les différentes sources (par exemple pour accéder à des chaînes de programmes suivantes PG-E, PG-F, ...). Ainsi, dans l'exemple représenté, les vignettes des contenus sont représentées sur un axe horizontal (flèches F3 et F4) en fonction des sources de contenus et selon un axe vertical (flèches F1 et F2) en fonction du temps. Comme indiqué ci-avant, dans une variante, il peut être prévu de répartir les vignettes dans différentes lignes associées chacune à une source de contenu.

On décrit plus en détails ci-après le contenu de la matrice affichée en fonction de l'instant de référence sélectionné dans le cadre 12 de la figure 2. On prévoit ainsi, outre les flèches de navigation F3 et F4 pour accéder à différentes sources de contenu, les flèches de navigation F1 et F2 pour incrémenter ou décrémenter l'instant de référence, affiché dans le cadre 12. En particulier, un menu peut être prévu pour que l'utilisateur détermine le pas d'incrément ou de décrément de l'instant sélectionné lors de la navigation via les flèches F1 et F2. Par exemple, le pas peut être choisi de quelques heures pour afficher des contenus qui seront disponibles dans une plage temporelle donnée (par exemple dans la soirée), ou encore d'une journée pour afficher les contenus disponibles à une date donnée (par exemple le lendemain, ou encore dans une semaine), ou autres.

Dans un mode de réalisation, lorsque l'utilisateur accède à la grille de programmes telle que représentée sur la figure 2, la vignette couramment sélectionnée correspondant au programme qui était suivi par l'utilisateur au moment où l'affichage de la grille a été demandé. Par ailleurs, le cadre 12 indique par défaut l'heure courante (10H15 dans l'exemple représenté).

La vignette couramment sélectionnée est par exemple entourée d'un curseur CU ou mise en surbrillance ou affichée de manière différente par rapport aux autres vignettes. On suppose dans la suite de la description qu'il est fait usage d'un curseur CU pour marquer la vignette couramment sélectionnée. Ainsi, le curseur CU est initialement positionné sur l'une des vignettes de la rangée de position fixe RF (ligne médiane de la matrice telle que représentée dans l'exemple de la figure 2), et de la colonne correspondant à la chaîne de télévision que l'utilisateur regardait (par exemple le programme PG-C de la figure 2). L'utilisateur peut alors faire naviguer le curseur CU d'une vignette à l'autre de la matrice. En pratique, le terminal STB pilote l'affichage du curseur, ainsi qu'un déplacement apparent du curseur d'une vignette à l'autre de la rangée de position fixe RF.

L'utilisateur peut actionner par exemple des boutons correspondant aux flèches haut-bas-droite-gauche de la télécommande TEL pour positionner où il le souhaite le curseur CU dans la matrice. Il peut en outre sortir de la matrice, en continuant à actionner ces boutons pour atteindre les flèches F1, F2, F3 et F4. Il peut actionner en outre le bouton «OK» de sa télécommande par exemple pour sélectionner un contenu.

Le terminal pilote en outre l'affichage d'informations supplémentaires, hors de la matrice, sur le contenu de la vignette qui est désignée par le curseur CU, dans le cadre 11 de la figure 2. Par exemple, si chaque vignette donne des informations sur le type de contenu (film, documentaire, série, programme sportif, journal d'informations télévisées, magazine, ou autres), le titre du contenu, ainsi que l'instant de début et l'instant de fin de ce programme, le cadre 11 peut donner en outre des détails supplémentaires comme par exemple un bref résumé du programme (et notamment le genre d'un film et ses acteurs, ou le type de documentaire, ou une indication de l'événement sportif, etc.). En navigant ainsi d'une vignette à l'autre à l'aide du curseur CU, l'utilisateur peut finalement sélectionner la lecture d'un contenu dont la vignette est désignée par le curseur.

Dans l'exemple représenté sur la figure 2, la matrice comporte trois lignes :
- la ligne médiane RF associée à l'instant indiqué dans le cadre 12,
- ainsi qu'une ligne d'éléments de contenus qui étaient disponibles chacun via une source de contenus antérieurement au contenu de la ligne médiane RF disponible via cette même source, cette ligne étant référencée R1 sur la figure 2, et
- une ligne de contenus disponibles chacun via une source de contenus postérieurement au contenu de la ligne médiane RF disponible via cette même source, référencée R2 sur la figure 2.

En considérant donc un axe temporel vertical vers le bas, la ligne R1 précède la ligne médiane RF et la ligne R2 succède à la ligne médiane RF. On peut constater en référence à la figure 2, que les contenus de chaque source se succèdent dans le temps, depuis la ligne R1 jusqu'à la ligne R2, et ce, pour chaque colonne. Par ailleurs, sur la ligne médiane, les vignettes de tous les contenus indiquent des plages temporelles incluant toutes l'instant affiché dans le cadre 12. Par contre, pour les lignes autres que la ligne médiane RF, par exemple pour la ligne R1 ou pour la ligne R2, il est possible que des contenus d'une même ligne puissent être prévus dans des plages temporelles qui ne se recoupent pas entre elles (cas par exemple des contenus des sources PG-A et PG-B de la ligne R2). L'explication de cette observation est donnée en détail ci-après, en référence aux figures 3a et 3b.

En effet, on se réfère maintenant aux figures 3a et 3b pour décrire le deuxième mode de navigation.

Ce deuxième mode de navigation permet de sélectionner n'importe quelle vignette dans la matrice et de modifier cette sélection. Cette modification a pour effet d'incrémenter ou de décrémenter l'instant de référence indiqué dans le cadre 12, comme décrit en détails ci-après.

La sélection d'une vignette est effectuée au moyen des flèches F1 à F4, c'est-à-dire par action sur les touches de la télécommande représentant les flèches "haut", "bas", "droite" "gauche".

Sur la figure 3a, l'instant courant est 10 heures et 30 minutes, dans le cadre 12. Il est alors affiché des programmes P21 à P23 diffusés dans des plages horaires incluant l'heure courante 10H30 dans la ligne médiane RF. Préalablement à la commande d'affichage du guide EPG, l'utilisateur regardait le programme P21. Ainsi, à l'affichage du guide EPG, le curseur CU est positionné par défaut sur ce programme P21.

L'utilisateur appuie ensuite sur la flèche « haut » de sa télécommande (flèche F1), signifiant ainsi qu'il souhaite sélectionner la vignette correspondant au programme précédent P11 (ligne RI) sur la même chaîne diffusant le programme dont la vignette est couramment sélectionnée.

Il s'en suit, en référence à la figure 3b, que l'instant de référence auquel est associée la ligne médiane RF, qui est indiqué maintenant dans le cadre 12, est un instant auquel le programme dont la vignette est sélectionnée est disponible, par exemple l'instant de début du programme P11 de la vignette que désigne maintenant le curseur CU, c'est-à-dire 10 heures. Dans la ligne médiane RF sont ainsi affichées les vignettes des programmes diffusés via les différentes chaînes représentées dans la matrice à l'instant de référence ainsi modifié. Par ailleurs, les vignettes des lignes R1 et R2 de la matrice sont également mises à jour de la même manière que dans le premier mode de navigation, sauf que, dans le deuxième mode de navigation, l'instant de référence indiqué dans le cadre 12 est un instant auquel le programme sélectionné est disponible, cet instant étant choisi par défaut, dans l'exemple décrit, comme étant l'instant de début du programme sélectionné.

On notera alors que le curseur CU, lorsque l'utilisateur le fait naviguer dans la matrice, est toujours situé dans la ligne médiane RF, puisqu'à chaque commande par l'utilisateur d'une visualisation des informations sur un programme suivant ou précédant l'instant donné dans la cadre 12, la vignette de ce programme apparaît dans la ligne médiane RF et elle est désignée par le curseur CU. L'instant donné dans le cadre 12 devient l'instant de début de diffusion de ce programme. Il s'en suit aussi une mise à jour des vignettes affichées avec :
- une synchronisation des vignettes de la ligne médiane RF relatives à des contenus dont les plages de diffusion incluent l'instant donné dans le cadre 12, et
- une adaptation des vignettes des lignes précédente R1 et suivante R2, la ligne précédente incluant les vignettes de chaque contenu diffusé avant un contenu de la ligne médiane RF et de la même colonne et la ligne suivante incluant les vignettes de chaque contenu diffusé après un contenu de la ligne médiane RF et de la même colonne.

Ainsi, dans l'exemple représenté, une nouvelle vignette d'un programme P01 précédant le programme P11 s'affiche sur la première ligne R1. De même, la vignette du programme P03 qui précède le programme P13 diffusé à l'instant donné de 10H s'affiche dans la ligne R1. En revanche, le programme P22 diffusé aussi à l'instant donné de 10H reste à la même position dans la ligne médiane RF et la vignette du programme P12 reste aussi à la même position dans la ligne R1, puisque ce programme P12 précède immédiatement le programme P22. De même, la vignette du programme P21 dont la diffusion est prévue après celle du programme P11, vient prendre la place de la vignette du programme P31 dans la ligne R2 et la vignette du programme P23 vient aussi prendre la place du programme P33 dans la ligne R2.

On comprendra ainsi que l'affichage dans les vignettes de la rangée de position fixe RF est propre à des contenus diffusés dans des plages horaires qui incluent l'instant donné indiqué dans le cadre 12. En revanche, chaque vignette de la première ligne R1 comporte des informations sur un contenu (par exemple le programme P01) proposé en diffusion avant un contenu issu d'une même source (le programme P11) dont la vignette figure dans la rangée de positions fixes RF. De même, chaque vignette (par exemple du programme P21) de la deuxième ligne R2 comporte des informations sur un contenu (le programme P21) proposé en diffusion après un contenu (le programme P11) issu d'une même source et dont la vignette figure dans la ligne médiane RF. Des contenus peuvent alors figurer dans une même ligne R1 ou R2, même si les diffusions de ces contenus sont (ou étaient) prévues dans des plages temporelles respectives qui ne comportent pas de segment commun.

Ainsi, lorsque l'utilisateur sélectionne une autre vignette, que ce soit par les flèches F1, F2 pour sélectionner un programme antérieur ou postérieur au programme couramment sélectionné, ou par les flèches F3, F4 pour sélectionner une autre vignette de la ligne médiane RF, c'est-à-dire pour sélectionner un programme diffusé sur une autre chaîne, au moins en partie simultanément avec le programme couramment sélectionné, toutes les vignettes sont mises à jour dynamiquement par rapport à un nouvel instant de référence défini comme étant un instant auquel le programme nouvellement sélectionné est disponible. Par défaut, l'instant de début de diffusion du programme nouvellement sélectionné est choisi comme nouvel instant de référence. Ce nouvel instant est affiché dans le cadre 12 et mis à jour à chaque fois qu'une autre vignette est sélectionnée.

On se réfère à nouveau à la figure 2 pour décrire plus en détails les images contenues dans les vignettes. En effet, les images représentées dans chaque vignette de la figure 2 peuvent être, dans un exemple de réalisation :
- des images animées dans la ligne médiane RF, si la ligne médiane est associée à un instant courant (par exemple l'heure en cours) ; et
- les images des lignes R1 et R2 sont fixes, dans ce mode de réalisation.
Dans cet exemple de réalisation, le terminal STB accède, dans le flux de données multimédias incluant des métadonnées, aux données d'images animées pour afficher une « mosaïque » des programmes en cours de diffusion. Par exemple, certaines fonctionnalités actuelles permettent, en partant d'un flux de données, de l'exploiter en plusieurs flux d'images distincts. Il est alors possible de sélectionner des flux à afficher en même temps sur l'écran, avec des tailles et des positions d'affichage dans l'écran choisies, ces flux étant dits PIP (pour « Picture in Picture »). Cette technique offre alors la possibilité d'afficher une représentation de type dit « mosaïque » dans la rangée de position fixe RF, en temps réel et interactive, sans dégrader les capacités d'affichage ou augmenter le temps de réaction du terminal STB à un changement de chaîne (« zapping »).

Par ailleurs, le terminal reçoit, dans les métadonnées, des données relatives aux contenus (par exemple le titre d'une émission, son heure de début, son heure de fin, son genre), ainsi, en particulier, que des données d'images (généralement fixes) pour afficher une image propre au contenu (par exemple une image caractéristique d'un programme, une affiche de film, ou autres). Ainsi, les images dans les vignettes des lignes R1 et R2 peuvent correspondre à ces images, tirées des métadonnées.

Dans une réalisation avantageuse, il est proposé en outre un outil adapté à une recherche parmi une abondance de contenus télévisuels. Cet outil consiste en un moteur de recherche multicritères, sur la base des données descriptives des contenus, qui servent notamment à enrichir le contenu des vignettes affichées au sens de l'invention. Ces données descriptives sont par exemple les métadonnées que reçoit le dispositif au sens de l'invention pour piloter l'affichage des vignettes. Dans cette réalisation, il est proposé une recherche par valeurs ou mots-clés appropriés selon un choix offert à l'utilisateur, comme décrit ci-après.

La recherche des contenus répondant aux critères de filtrage choisis par l'utilisateur s'effectuant à partir des métadonnées fournies, toute recherche à partir des informations fournies par les métadonnées est possible (date, catégorie, genre, nom, durée du programme, chaîne, ou autres).

Les critères de filtrage sont indépendants les uns des autres et peuvent être combinés les uns avec les autres pour une recherche multicritères. Il est cependant possible de ne renseigner qu'un critère de filtrage, ou de faire une recherche très précise, en utilisant tous les types de filtres disponibles (ce qui restreint bien entendu le nombre de programmes présentés dans la grille).

Il est possible d'avoir un critère de filtrage « personnalisé », où l'utilisateur peut entrer un nom (d'acteur, de film, ou autres) ou un mot-clef ou une valeur de son choix, ou encore un critère de filtrage « prédéfini » comme décrit ci-après. Dans l'exemple décrit effectivement ci-après, il est proposé des critères de filtrage prédéfinis, pertinents et efficaces dans le cadre d'une recherche de programmes à regarder ou à enregistrer rapidement.

Un premier type de filtre concerne la période de diffusion d'un contenu et permet un filtrage selon par exemple les critères prédéfinis suivants : toutes, maintenant, ce soir, demain, date des jours suivants, etc.

Un deuxième type de filtre concerne la catégorie d'un contenu et permet un filtrage selon par exemple les critères prédéfinis suivants : toutes, divertissement, film, série, informations, sport, documentaire, jeunesse, musique, etc.

Un troisième type de filtre concerne le genre d'un contenu et permet un filtrage selon les critères prédéfinis suivants : tous, action, comédie, famille, fantastique, « thriller », etc.

Un quatrième type de filtre concerne la chaîne de télévision diffusant un contenu et permet un filtrage selon les critères prédéfinis suivants : toutes, favorites, haute définition, publiques/privées, etc.

Ces critères sont donnés bien entendu à titre d'exemple et leur liste n'est pas exhaustive.

En référence à la figure 4, il est proposé donc à l'utilisateur des moyens de filtrage 13, 14, 15, matérialisés par des « boutons », contenant l'intitulé du type de filtre associé chaque fois à ce bouton. Ainsi, dans la représentation globale de la grille des programmes de la figure 4, une barre de boutons de filtrage, située par exemple au-dessus de la matrice de la grille, permet de faire un filtrage parmi la totalité des programmes disponibles suivant des critères de filtrage choisis par l'utilisateur. Lorsque l'on clique sur un bouton de filtrage, les différents critères de filtrage prédéfinis pour le type de filtre associé à ce bouton apparaissent sous forme d'une liste déroulante ou d'une liste tournant sur un rouleau, chaque élément de la liste étant un critère de filtrage sélectionnable par l'utilisateur.

Après chaque sélection par l'utilisateur d'un critère de filtrage, la grille complète est toujours affichée mais les vignettes des contenus répondant aux critères de filtrage apparaissent différemment par rapport aux vignettes des contenus ne répondant pas à ces critères. Ces derniers sont représentés par des vignettes, encore de même dimension, mais par exemple d'apparence grisée, sans image, et sans détails sur le contenu ou avec moins de détails d'informations par rapport aux contenus répondant aux critères de filtrage. La seule mention que portent ces vignettes grisées est par exemple le type de contenu (série, journal d'informations, film, etc.). Selon une variante de réalisation, les vignettes des contenus ne répondant pas aux critères de filtrage sont vides de toute information : ces vignettes sont matérialisées par les contours d'une cellule vide dans la matrice, dont la taille est toujours la même que celle des cellules présentant des informations sur un contenu répondant aux critères de filtrage.

Une telle réalisation permet à l'utilisateur de distinguer facilement et très rapidement les contenus répondant aux critères de filtrage choisis par l'utilisateur.

La navigation dans la grille reste cependant inchangée, ainsi que le principe d'affichage et de sélection des contenus décrit ci-avant.

Ainsi, par pression sur une touche de la télécommande TEL, l'utilisateur place le curseur CU sur le premier bouton de filtrage, par exemple le bouton 13 dénommé « période », permettant un premier type de filtrage. La liste de critères associée au bouton de filtrage 13 contient par exemple les critères de filtrage prédéfinis suivants: « maintenant », « demain », « dans la soirée », « dans la semaine », etc. L'utilisateur sélectionne le critère de filtrage désiré (par exemple « demain ») à l'aide des flèches haut et bas de navigation de sa télécommande.

Lorsque l'utilisateur valide ensuite sa sélection, la grille est mise à jour instantanément en fonction du critère de filtrage choisi. Le nom du critère de filtrage choisi (par exemple « demain ») s'affiche alors sous ou dans le bouton de filtrage « période ».

Ensuite, l'utilisateur peut déplacer le curseur pour filtrer les contenus selon un deuxième type de filtrage, par exemple par « catégorie », au moyen du bouton de filtrage 14. La liste de critères associée contient par exemple les critères de filtrage prédéfinis suivants: « tous », « infos », « film », « magazine », « sport », « documentaire », etc. L'utilisateur peut choisir un critère de filtrage prédéfini figurant dans la liste ou saisir un mot-clef définissant ce critère de filtrage: par exemple la catégorie « sport ».

Il peut passer ensuite au bouton de filtrage suivant 15, pour un autre type de filtrage, par exemple en fonction de la chaîne de diffusion d'un contenu. La liste des critères de filtrage associé à ce bouton de filtrage contient par exemple les critères de filtrage prédéfinis suivants : « toutes les chaînes », « favorites », « haute définition », etc. Après sélection par l'utilisateur d'un critère de filtrage, une ou plusieurs colonnes de la matrice sont si besoin remplacées par de nouvelles colonnes, de sorte que la matrice ne contienne que des colonnes relatives à des chaînes répondant au critère de filtrage choisi via le bouton de filtrage 15.

La figure 4 illustre à titre d'exemple l'apparence de la grille après lancement de la recherche suivant les trois critères de filtrage « maintenant », « sport », et « toutes les chaînes ».

Dans une réalisation, la sélection effectuée est effacée (ou remise à zéro) dès lors que l'utilisateur quitte le guide EPG. Il lui faut alors relancer ensuite une nouvelle recherche s'il ouvre ultérieurement le guide EPG lorsque les critères de sélection ne sont pas mémorisés.

La grande diversité des programmes audiovisuels diffusés par un nombre toujours croissant de chaînes procure à l'utilisateur une richesse considérable de programmes à regarder. Toutefois, il se pose le problème du choix parmi ces programmes. La sélection facile et rapide à un moment donné d'un contenu parmi une multitude de contenus procure alors un avantage dans la réalisation de l'invention en montrant une matrice avec une sélection seulement de vignettes pour les contenus sélectionnés. Toutefois, un tel filtrage (par exemple par mot-clé dans les métadonnées) pour un affichage de programmes sélectionnés d'un guide EPG peut faire en soi l'objet d'une protection séparée, indépendante d'une représentation de vignettes de mêmes dimensions.

Bien entendu, la présente invention ne se limite pas à la forme de réalisation décrite ci-avant à titre d'exemple ; elle s'étend à d'autres variantes.

Ainsi, il a été décrit ci-avant, en référence à la figure 2 ou aux figures 3a et 3b, des programmes qui se succèdent immédiatement dans le temps. En variante, il est possible que les programmes affichés ne s'enchaînent pas immédiatement, par exemple lorsqu'un court programme publicitaire s'intercale entre deux programmes chacun de longue durée. Ainsi, le deuxième programme (qui suit le premier) peut être prévu pour une diffusion une dizaine de minutes plus tard que la fin du premier programme. L'affichage des vignettes correspondantes peut avantageusement tenir compte d'un tel décalage temporel.

Il a été représenté ci-avant à titre d'exemple dans les figures 2, 3a et 3b, des matrices à trois lignes. Toutefois, dans des variantes possibles de réalisation, il peut être prévu d'afficher une matrice à plus de trois lignes, ou encore comportant seulement deux lignes (par exemple une ligne d'instant courant et une ligne des programmes suivants). Toutefois, l'affichage d'informations sur des émissions déjà diffusées est avantageux car il est maintenant possible de visualiser une émission déjà passée (fonction dite « catch up ») ou encore de visualiser une émission depuis le début, même si elle a déjà commencé (fonction dite « start over »).

Par ailleurs, il a été décrit ci-avant, en référence à la figure 1, un dispositif tel qu'un terminal de type Set Top Box pour traiter les données à afficher sur l'écran du poste TV. Bien entendu, en variante, l'invention peut être mise en oeuvre dans d'autres types d'environnement. Ainsi, un dispositif tel qu'un ordinateur de type PC, ou encore un terminal mobile, peuvent mettre en oeuvre l'invention pour un affichage sur un écran relié à l'ordinateur ou sur l'écran du terminal, respectivement. De même, le mode de navigation dans la grille à l'aide d'une télécommande TEL a été décrit ci-avant à titre d'exemple et peut, en variante, être réalisé à l'aide d'une interface gestuelle, d'un mobile ou tout autre moyen de commande.

La présente invention vise alors un dispositif, de façon générale, comportant des moyens de traitement de données pour un affichage au sens de l'invention.

A cet effet, ces moyens de traitement peuvent être animés par l'exécution d'un programme informatique comportant des instructions pour la mise en oeuvre du procédé décrit ci-avant, lorsque ce programme est exécuté par un processeur.

La présente invention vise aussi un système, tel que représenté à titre d'exemple sur la figure 1, et comportant :
- un dispositif TV comprenant un écran d'affichage, et
- un dispositif (référencé STB dans l'exemple de la figure 1) comportant des moyens de traitement de données pour un affichage, sur commande reçue d'un utilisateur, de vignettes contenant des informations relatives à des contenus multimédias ayant des durées respectives et disponibles via une pluralité de sources respectives et à des instants respectifs, ces vignettes étant réparties sur l'écran :
- par instant de disponibilité selon un premier axe, et
- par source selon un deuxième axe distinct du premier axe.
En particulier, les vignettes affichées sont de dimensions apparentes égales et indépendantes de la durée des contenus.

## Revendications

1. Procédé mis en oeuvre par un dispositif, de traitement de données pour un affichage, sur commande reçue d'un utilisateur, de vignettes contenant des informations relatives à des contenus multimédias ayant des durées respectives et disponibles via une pluralité de sources respectives (PG-A, PG-B, PG-C, PG-D) et à des instants respectifs (12), dans lequel lesdites vignettes sont réparties sur un écran selon une matrice telle que chaque rangée selon une première dimension de la matrice contient des vignettes relatives à une même source organisées de manière chronologique, la source étant différente d'une rangée selon la première dimension à l'autre, **caractérisé en ce que** :
les vignettes correspondent à des contenus respectifs différents et sont de dimensions apparentes égales et indépendantes de la durée des contenus,
une rangée (RF) de position fixe correspondant à une rangée médiane dans la matrice selon une deuxième dimension comporte les vignettes des contenus disponibles à un instant de référence (12) via les différentes sources représentées dans la matrice,
et, le dispositif comprenant des moyens pour modifier ledit instant de référence, lorsque, sur commande d'un utilisateur, ledit instant de référence est modifié, le dispositif commande une mise à jour des vignettes de la matrice de telle sorte que ladite rangée de position fixe (RF) correspondant à la rangée médiane comprenne les vignettes relatives aux contenus (P22, P13) diffusés à l'instant de référence modifié.

2. Procédé selon la revendication 1, **caractérisé en ce que** le dispositif comprend des moyens pour sélectionner une vignette dans la matrice,
et **en ce que**, lorsque, sur commande d'un utilisateur, une autre vignette est sélectionnée, le dispositif commande une mise à jour de l'instant de référence à un instant où le contenu (P11) associé à la vignette nouvellement sélectionnée est disponible.

3. Procédé selon la revendication 2, **caractérisé en ce que**, lorsque, sur commande d'un utilisateur, une autre vignette est sélectionnée, le dispositif commande une mise à jour des vignettes de la matrice de telle sorte que ladite rangée de position fixe (RF) correspondant à la rangée médiane comprend la vignette nouvellement sélectionnée et les vignettes relatives aux contenus (P22, P13) diffusés à l'instant de référence mis à jour.

4. Procédé selon la revendication précédente, **caractérisé en ce que** :
- chaque vignette d'une rangée (R1) précédant la rangée de position fixe (RF) correspondant à la rangée médiane selon la deuxième dimension comporte des informations sur un contenu (P01) proposé en diffusion avant un contenu (P11) issu d'une même source et dont la vignette figure dans la rangée de position fixe (RF) correspondant à la rangée médiane, et
- chaque vignette d'une rangée (R2) suivant la rangée de position fixe (RF) correspondant à la rangée médiane selon la deuxième dimension comporte des informations sur un contenu (P21) proposé en diffusion après un contenu (P11) issu d'une même source et dont la vignette figure dans la rangée de position fixe (RF) correspondant à la rangée médiane.

5. Procédé selon l'une des revendications précédentes, **caractérisé en ce que** le dispositif pilote l'affichage en outre d'un curseur (CU) désignant la vignette d'un contenu en cours de diffusion à l'instant de référence,
et **en ce que** :
- sur commande d'un utilisateur, l'affichage du curseur (CU) se déplace d'une vignette à l'autre
- pour, sur commande de l'utilisateur, déclencher la restitution d'un contenu dont la vignette est désignée par le curseur (CU).

6. Procédé selon la revendication 5, **caractérisé en ce que** le dispositif pilote l'affichage, hors de la matrice, d'informations supplémentaires (11) sur le contenu dont la vignette est désignée par le curseur, parmi au moins un instant de début de diffusion du contenu, une durée du contenu, et une description du contenu.

7. Procédé selon l'une des revendications précédentes, dans lequel une partie au moins desdits contenus correspond à des programmes de télévision, **caractérisé en ce qu'**une partie au moins des vignettes comporte des images des contenus, et **en ce que** le dispositif (STB) accède :
- à une mosaïque des programmes de télévision pour obtenir une partie au moins desdites images, sous forme d'images animées, au moins pour des contenus en cours de diffusion, et
- à des métadonnées propres à chaque contenu pour obtenir une partie au moins desdites images, sous forme d'images fixes, au moins pour des contenus dont la diffusion est prévue à des instants futurs.

8. Procédé selon l'une des revendications précédentes, **caractérisé en ce que** le dispositif pilote l'affichage en outre d'un menu (10) de sélection de type de contenu (TV, MM), pour afficher selon les première et deuxième dimensions de la matrice, sur commande d'un utilisateur, les contenus d'un type de contenu sélectionné.

9. Procédé selon l'une des revendications précédentes, **caractérisé en ce que** le dispositif est agencé pour :
- sélectionner des contenus selon au moins un critère, et
- piloter un affichage des vignettes de la matrice en affichant les contenus sélectionnés de manière différente par rapport aux contenus non sélectionnés.

10. Procédé selon la revendication 9, **caractérisé en ce que** le dispositif pilote l'affichage de vignettes avec moins de détails d'informations pour les contenus non sélectionnés par rapport aux contenus sélectionnés.

11. Programme informatique comportant des instructions pour la mise en oeuvre du procédé selon l'une des revendications précédentes, lorsque ce programme est exécuté par un processeur.

12. Dispositif comportant des moyens de traitement de données pour un affichage, sur commande reçue d'un utilisateur, de vignettes contenant des informations relatives à des contenus multimédias ayant des durées respectives et disponibles via une pluralité de sources respectives (PG-A, PG-B, PG-C, PG-D) et à des instants respectifs, lesdites vignettes étant réparties sur un écran selon une matrice telle que chaque rangée selon une première dimension de la matrice contient des vignettes relatives à une même source organisées de manière chronologique, la source étant différente d'une rangée selon la première dimension à l'autre, **caractérisé en ce que** les moyens de traitement de données sont agencés pour que: les vignettes correspondent à des contenus respectifs différents et sont de dimensions apparentes égales et indépendantes de la durée des contenus,
- une rangée (RF) de position fixe correspondant à une rangée médiane dans la matrice selon une deuxième dimension comporte les vignettes des contenus disponibles à un instant de référence (12) via les différentes sources représentées dans la matrice,
le dispositif comprenant en outre des moyens pour modifier ledit instant de référence,
dans lequel les moyens de traitement de données sont agencés pour, lorsque, sur commande d'un utilisateur, ledit instant de référence est modifié, commander une mise à jour des vignettes de la matrice de telle sorte que ladite rangée de position fixe (RF) correspondant à la rangée médiane comprenne les vignettes relatives aux contenus (P22, P13) diffusés à l'instant de référence modifié.

13. Dispositif selon la revendication 12, comprenant en outre des moyens pour sélectionner une vignette dans la matrice,
dans lequel les moyens de traitement sont en outre agencés pour, lorsque, sur commande d'un utilisateur, une autre vignette est sélectionnée, commander une mise à jour de l'instant de référence à un instant où le contenu (P11) associé à la vignette nouvellement sélectionnée est disponible.

14. Dispositif selon la revendication 13, dans lequel les moyens de traitement sont en outre agencés pour, lorsque, sur commande d'un utilisateur, une autre vignette est sélectionnée, commander une mise à jour des vignettes de la matrice de telle sorte que ladite rangée de position fixe (RF) correspondant à la rangée médiane comprend la vignette nouvellement sélectionnée et les vignettes relatives aux contenus (P22, P13) diffusés à l'instant de référence mis à jour.

15. Dispositif selon la revendication 12, dans lequel les moyens de traitement sont en outre agencés pour que :
- chaque vignette d'une rangée (R1) précédant la rangée de position fixe (RF) correspondant à la rangée médiane selon la deuxième dimension comporte des informations sur un contenu (P01) proposé en diffusion avant un contenu (P11) issu d'une même source et dont la vignette figure dans la rangée de position fixe (RF) correspondant à la rangée médiane, et
- chaque vignette d'une rangée (R2) suivant la rangée de position fixe (RF) correspondant à la rangée médiane selon la deuxième dimension comporte des informations sur un contenu (P21) proposé en diffusion après un contenu (P11) issu d'une même source et dont la vignette figure dans la rangée de position fixe (RF) correspondant à la rangée médiane.

## Patentansprüche

1. Verfahren, das von einer Vorrichtung umgesetzt wird, zur Datenverarbeitung für eine Anzeige auf Befehl, der von einem Benutzer empfangen wird, von Vorschaubildern, die Informationen in Bezug auf Multimediainhalte, die jeweilige Dauern aufweisen und über mehrere jeweilige Quellen (PG-A, PG-B, PG-C, PG-D) verfügbar sind, und auf jeweilige Zeitpunkte (12) enthalten, wobei die Vorschaubilder auf einem Bildschirm gemäß einer Matrix derart verteilt werden, dass jede Reihe gemäß einer ersten Abmessung der Matrix Vorschaubilder in Bezug auf eine gleiche Quelle enthält, die chronologisch organisiert werden, wobei die Quelle von einer Reihe gemäß der ersten Abmessung zur anderen verschieden ist, **dadurch gekennzeichnet, dass**:
die Vorschaubilder jeweiligen verschiedenen Inhalten entsprechen und von sichtbar gleichen Abmessungen sind und von der Dauer der Inhalte unabhängig sind,
eine Reihe (RF) von fester Position, die einer mittleren Reihe in der Matrix gemäß einer zweiten Abmessung entspricht, die Vorschaubilder der Inhalte aufweist, die zu einem Referenzzeitpunkt (12) über die verschiedenen Quellen, die in der Matrix dargestellt werden, verfügbar sind,
und, wobei die Vorrichtung Mittel aufweist, um den Referenzzeitpunkt zu ändern, wenn auf Befehl eines Benutzers der Referenzzeitpunkt geändert wird, die Vorrichtung ein Aktualisieren der Vorschaubilder der Matrix derart steuert, dass die Reihe von fester Position (RF), die der mittleren Reihe entspricht, die Vorschaubilder in Bezug auf die Inhalte (P22, P13) aufweist, die zu dem geänderten Referenzzeitpunkt gesendet werden.

2. Verfahren nach Anspruch 1, **dadurch gekennzeichnet, dass** die Vorrichtung Mittel zum Auswählen eines Vorschaubildes in der Matrix aufweist
und dadurch, dass, wenn auf Befehl eines Benutzers ein anderes Vorschaubild ausgewählt wird, die Vorrichtung ein Aktualisieren des Referenzzeitpunktes zu einem Zeitpunkt steuert, an dem der Inhalt (P11), der dem neu ausgewählten Vorschaubild zugeordnet wird, verfügbar ist.

3. Verfahren nach Anspruch 2, **dadurch gekennzeichnet, dass**, wenn auf Befehl eines Benutzers ein anderes Vorschaubild ausgewählt wird, die Vorrichtung ein Aktualisieren der Vorschaubilder der Matrix derart steuert, dass die Reihe von fester Position (RF), die der mittleren Reihe entspricht, das neu ausgewählte Vorschaubild und die Vorschaubilder in Bezug auf die Inhalte (P22, P13) aufweist, die zu dem aktualisieren Referenzzeitpunkt gesendet werden.

4. Verfahren nach dem vorhergehenden Anspruch, **dadurch gekennzeichnet, dass**:
- jedes Vorschaubild einer Reihe (R1) vor der Reihe von fester Position (RF), die der mittleren Reihe gemäß der zweiten Abmessung entspricht, Informationen über einen Inhalt (P01) aufweist, der vor einem Inhalt (P11), der aus einer gleichen Quelle stammt, zur Ausstrahlung vorgeschlagen wird und dessen Vorschaubild in der Reihe von fester Position (RF), die der mittleren Reihe entspricht, enthalten ist, und
- jedes Vorschaubild einer Reihe (R2) nach der Reihe von fester Position (RF), die der mittleren Reihe gemäß der zweiten Abmessung entspricht, Informationen über einen Inhalt (P21) aufweist, der nach einem Inhalt (P11), der aus einer gleichen Quelle stammt, zur Ausstrahlung vorgeschlagen wird und dessen Vorschaubild in der Reihe von fester Position (RF), die der mittleren Reihe entspricht, enthalten ist.

5. Verfahren nach einem der vorhergehenden Ansprüche, **dadurch gekennzeichnet, dass** die Vorrichtung ferner die Anzeige eines Cursors (CU) steuert, der auf das Vorschaubild eines Inhalts, der zu dem Referenzzeitpunkt gerade gesendet wird, zeigt,
und dadurch, dass:
- auf Befehl eines Benutzers die Anzeige des Cursors (CU) von einem Vorschaubild zum anderen verschoben wird,
- um auf Befehl des Benutzers die Wiedergabe eines Inhalts auszulösen, dessen Vorschaubild von dem Cursor (CU) angezeigt wird.

6. Verfahren nach Anspruch 5, **dadurch gekennzeichnet, dass** die Vorrichtung die Anzeige außerhalb der Matrix von zusätzlichen Informationen (11) über den Inhalt, dessen Vorschaubild von dem Cursor angezeigt wird, unter mindestens einem Anfangszeitpunkt der Ausstrahlung des Inhalts, einer Dauer des Inhalts und einer Beschreibung des Inhalts steuert.

7. Verfahren nach einem der vorhergehenden Ansprüche, wobei mindestens ein Teil der Inhalte Fernsehprogrammen entspricht, **dadurch gekennzeichnet, dass** mindestens ein Teil der Vorschaubilder Bilder der Inhalte aufweist und dass die Vorrichtung (STB) auf Folgendes zugreift:
- auf ein Mosaik der Fernsehprogramme, um mindestens einen Teil der Bilder in Form von bewegten Bildern mindestens für Inhalte, die gerade ausgestrahlt werden, zu erhalten und
- auf Metadaten, die jedem Inhalt eigen sind, um mindestens einen Teil der Bilder in Form von Standbildern mindestens für Inhalte, deren Ausstrahlung zu zukünftigen Zeitpunkten vorgesehen ist, zu erhalten.

8. Verfahren nach einem der vorhergehenden Ansprüche, **dadurch gekennzeichnet, dass** die Vorrichtung ferner die Anzeige eines Menüs (10) zur Auswahl der Art des Inhalts (TV, MM) steuert, um gemäß der ersten und zweiten Abmessung der Matrix auf Befehl eines Benutzers die Inhalte einer ausgewählten Art von Inhalt anzuzeigen.

9. Verfahren nach einem der vorhergehenden Ansprüche, **dadurch gekennzeichnet, dass** die Vorrichtung ausgebildet ist, um:
- Inhalte nach mindestens einem Kriterium auszuwählen und
- eine Anzeige von Vorschaubildern der Matrix zu steuern, indem die ausgewählten Inhalte gegenüber den nicht ausgewählten Inhalten auf verschiedene Weise angezeigt werden.

10. Verfahren nach Anspruch 9, **dadurch gekennzeichnet, dass** die Vorrichtung die Anzeige von Vorschaubildern mit weniger Informationsdetails für die nicht ausgewählten Inhalte gegenüber den ausgewählten Inhalten steuert.

11. Computerprogramm, das Befehle zum Umsetzen des Verfahrens nach einem der vorhergehenden Ansprüche aufweist, wenn das Programm von einem Prozessor ausgeführt wird.

12. Vorrichtung, die Mittel zur Datenverarbeitung für eine Anzeige auf Befehl, der von einem Benutzer empfangen wird, von Vorschaubildern, die Informationen in Bezug auf Multimediainhalte, die jeweilige Dauern aufweisen und über mehrere jeweilige Quellen (PG-A, PG-B, PG-C, PG-D) verfügbar sind, und auf jeweilige Zeitpunkte enthalten, aufweist, wobei die Vorschaubilder auf einem Bildschirm gemäß einer Matrix derart verteilt sind, dass jede Reihe gemäß einer ersten Abmessung der Matrix Vorschaubilder in Bezug auf eine gleiche Quelle enthält, die chronologisch organisiert sind, wobei die Quelle von einer Reihe gemäß der ersten Abmessung zur anderen verschieden ist, **dadurch gekennzeichnet, dass** die Mittel zur Datenverarbeitung ausgebildet sind, dass:
die Vorschaubilder den jeweiligen verschiedenen Inhalten entsprechen und von sichtbar gleichen Abmessungen sind und von der Dauer der Inhalte unabhängig sind,
- eine Reihe (RF) von fester Position, die einer mittleren Reihe in der Matrix gemäß einer zweiten Abmessung entspricht, die Vorschaubilder der Inhalte aufweist, die zu einem Referenzzeitpunkt (12) über die verschiedenen Quellen, die in der Matrix dargestellt sind, verfügbar sind,
wobei die Vorrichtung ferner Mittel zum Ändern des Referenzzeitpunktes aufweist,
wobei die Mittel zur Datenverarbeitung ausgebildet sind, um, wenn auf Befehl eines Benutzers der Referenzzeitpunkt geändert wird, ein Aktualisieren der Vorschaubilder der Matrix derart zu steuern, dass die Reihe von fester Position (RF), die der mittleren Reihe entspricht, die Vorschaubilder in Bezug auf die Inhalte (P22, P13) aufweist, die zu dem geänderten Referenzzeitpunkt gesendet werden.

13. Vorrichtung nach Anspruch 12, ferner umfassend Mittel zum Auswählen eines Vorschaubildes in der Matrix,
wobei die Mittel zur Datenverarbeitung ferner ausgebildet sind, um, wenn auf Befehl eines Benutzers ein anderes Vorschaubild ausgewählt wird, ein Aktualisieren des Referenzzeitpunktes zu einem Zeitpunkt zu steuern, an dem der Inhalt (P11), der dem neu ausgewählten Vorschaubild zugeordnet ist, verfügbar ist.

14. Verfahren nach Anspruch 13, wobei die Mittel zur Datenverarbeitung ferner ausgebildet sind, um, wenn auf Befehl eines Benutzers ein anderes Vorschaubild ausgewählt wird, ein Aktualisieren der Vorschaubilder der Matrix derart zu steuern, dass die Reihe von fester Position (RF), die der mittleren Reihe entspricht, das neu ausgewählte Vorschaubild und die Vorschaubilder in Bezug auf die Inhalte (P22, P13) aufweist, die zu dem aktualisierten Referenzzeitpunkt gesendet werden.

15. Vorrichtung nach Anspruch 12, wobei die Mittel zur Datenverarbeitung ferner ausgebildet sind, damit:
- jedes Vorschaubild einer Reihe (R1) vor der Reihe von fester Position (RF), die der mittleren Reihe gemäß der zweiten Abmessung entspricht, Informationen über einen Inhalt (P01) aufweist, der vor einem Inhalt (P11), der aus einer gleichen Quelle stammt, zur Ausstrahlung vorgeschlagen wird und dessen Vorschaubild in der Reihe von fester Position (RF), die der mittleren Reihe entspricht, enthalten ist, und
- jedes Vorschaubild einer Reihe (R2) nach der Reihe von fester Position (RF), die der mittleren Reihe gemäß der zweiten Abmessung entspricht, Informationen über einen Inhalt (P21) aufweist, der nach einem Inhalt (P11), der aus einer gleichen Quelle stammt, zur Ausstrahlung vorgeschlagen wird und dessen Vorschaubild in der Reihe von fester Position (RF), die der mittleren Reihe entspricht, enthalten ist.

## Claims

1. Data processing method carried out by a device for a display, in response to a command received from a user, of thumbnail images containing information relating to multimedia contents having respective durations and being available via a plurality of respective sources (PG-A, PG-B, PG-C, PG-D) at respective times (12), in which said thumbnail images are distributed on a screen according to a matrix in such a way that each row according to a first dimension of the matrix contains thumbnail images relating to the same source organized chronologically, the source being different from one row according to the first dimension to the other, **characterized in that**:
the thumbnail images correspond to respective different contents and have apparent equal dimensions independent from the duration of the contents,
a fixed-position row (RF) corresponding to a middle row in the matrix according to a second dimension comprises the thumbnail images of the contents available at a reference time (12) via the different sources represented in the matrix,
and, the device including means to modify said reference time when said reference time is modified in response to a command from a user, the device controls an update of the thumbnail images of the matrix in such a way that said fixed-position row (RF) corresponding to the middle row includes the thumbnail images relating to the contents (P22, P13) broadcast at the modified reference time.

2. Method according to Claim 1, **characterized in that** the device includes means to select a thumbnail image from the matrix,
and **in that**, when a different thumbnail image is selected in response to a command from a user, the device controls an update of the reference time at a time when the content (P11) associated with the newly selected thumbnail image is available.

3. Method according to Claim 2, **characterized in that**, when a different thumbnail image is selected in response to a command from a user, the device controls an update of the thumbnail images of the matrix in such a way that said fixed-position row (RF) corresponding to the middle row includes the newly selected thumbnail image and the thumbnail images relating to the contents (P22, P13) broadcast at the updated reference time.

4. Method according to the preceding claim, **characterized in that**:
- each thumbnail image of a row (R1) preceding the fixed-position row (RF) corresponding to the middle row according to the second dimension comprises information relating to a content (P01) proposed for broadcasting before a content (P11) originating from the same source and whose thumbnail image appears in the fixed-position row (RF) corresponding to the middle row, and
- each thumbnail image of a row (R2) following the fixed-position row (RF) corresponding to the middle row according to the second dimension comprises information relating to a content (P21) proposed for broadcasting after a content (P11) originating from the same source and whose thumbnail image appears in the fixed-position row (RF) corresponding to the middle row.

5. Method according to one of the preceding claims, **characterized in that** the device furthermore controls the display of a cursor (CU) designating the thumbnail image of a content currently being broadcast at the reference time,
and **in that**:
- the display of the cursor (CU) moves from one thumbnail image to the other in response to a command from a user
- in order to trigger the restitution of a content whose thumbnail image is designated by the cursor (CU) in response to a command from the user.

6. Method according to Claim 5, **characterized in that** the device controls the display, outside the matrix, of additional information (11) relating to the content whose thumbnail image is designated by the cursor, from at least one broadcasting start time for the content, a duration of the content and a description of the content.

7. Method according to one of the preceding claims, in which at least a part of said contents corresponds to television programmes, **characterized in that** at least a part of the thumbnail images comprises images of the contents, and **in that** the device (STB) accesses:
- a montage of the television programmes in order to obtain at least a part of said images, in the form of animated images, at least for contents currently being broadcast, and
- metadata belonging to each content in order to obtain at least a part of said images, in the form of still images, at least for content which is intended to be broadcast at future times.

8. Method according to one of the preceding claims, **characterized in that** the device furthermore controls the display of a menu (10) for selecting content type (TV, MM) in order to display the contents of a selected content type according to the first and second dimensions of the matrix, in response to a command from a user.

9. Method according to one of the preceding claims, **characterized in that** the device is configured to:
- select contents according to at least one criterion, and
- control a display of the thumbnail images of the matrix by displaying the selected contents in a different way compared with the unselected contents.

10. Method according to Claim 9, **characterized in that** the device controls the display of thumbnail images with fewer information details for the unselected contents compared with the selected contents.

11. Computer program comprising instructions for carrying out the method according to one of the preceding claims, when this program is executed by a processor.

12. Device comprising data processing means for a display, in response to a command from a user, of thumbnail images containing information relating to multimedia content having respective durations and being available via a plurality of respective sources (PG-A, PG-B, PG-C, PG-D) at respective times, said thumbnail images being distributed on a screen according to a matrix in such a way that each row according to a first dimension of the matrix contains thumbnail images relating to the same source organized chronologically, the source being different from one row according to the first dimension to the other, **characterized in that** the data processing means are configured so that:
- the thumbnail images correspond to respective different contents and have apparent equal dimensions independent from the duration of the contents,
- a fixed-position row (RF) corresponding to a middle row in the matrix according to a second dimension comprises the thumbnail images of the contents available at a reference time (12) via the different sources represented in the matrix,
the device furthermore including means to modify said reference time,
in which the data processing means are configured so that, when said reference time is modified in response to a command from a user, they control an update of the thumbnail images of the matrix in such a way that said fixed-position row (RF) corresponding to the middle row includes the thumbnail images relating to the contents (P22, P13) broadcast at the modified reference time.

13. Device according to Claim 12, furthermore including means to select a vignette from the matrix,
in which the processing means are furthermore configured so that, when a different thumbnail image is selected in response to a command from a user, they control an update of the reference time at a time when the content (P11) associated with the newly selected thumbnail image is available.

14. Device according to Claim 13, in which the processing means are furthermore configured so that, when a different thumbnail image is selected in response to a command from a user, they control an update of the thumbnail images of the matrix in such a way that said fixed-position row (RF) corresponding to the middle row includes the newly selected thumbnail image and the thumbnail images relating to the contents (P22, P13) broadcast at the updated reference time.

15. Device according to Claim 12, in which the processing means are furthermore configured so that:
- each thumbnail image of a row (R1) preceding the fixed-position row (RF) corresponding to the middle row according to the second dimension comprises information relating to a content (P01) proposed for broadcasting before a content (P11) originating from the same source and whose thumbnail image appears in the fixed-position row (RF) corresponding to the middle row, and
- each thumbnail image of a row (R2) following the fixed-position row (RF) corresponding to the middle row according to the second dimension comprises information relating to a content (P21) proposed for broadcasting after a content (P11) originating from the same source and whose thumbnail image appears in the fixed-position row (RF) corresponding to the middle row.
